# EUROPEAN PATENT APPLICATION

(11) **EP 2 120 192 A1**
(43) Date of publication of application: **18.11.2009**
(21) Application number: 08290446.7
(22) Date of filing: 13.05.2008
(51) Int. Cl.: G06Q 10/00

(54) **Method and system for supporting a decision-making process**

(71) Applicant: SAP AG, 69190 Walldorf (DE)
(72) Inventor: Ulmer, Cedric, 06000 Nice (FR); Gomez, Laurent, 06110 Le Cannet (FR); Hebert, Cedric, 06250 Mougins (FR)
(74) Representative: Lehmann, Judith Christina

(57) **Abstract**

A method for supporting a decision-making process in a time critical scenario managed by a distributed workflow consisting of a plurality of distributed nodes, the method comprising:
- assessing a given situation with available information to establish confidence percentages for possible decisions associated with the given situation and the distributed workflow;
- creating and providing a distributed workflow architecture that allows the distributed workflow to use the confidence percentages to enable a decision maker to get knowledge of a best possible course of action when executing the distributed workflow,

wherein fuzzy logic is used to compute and maintain the confidence percentages for the possible decisions based on the available information.

Furthermore, an appropriate workflow management system is proposed.

## Description

### Technical Field

The present disclosure refers to a method and system for supporting a decision-making process in a time critical scenario which is managed by a distributed workflow. Particularly, the present disclosure refers to a method and system that can be used in public security scenarios to improve situation awareness in emergency situations. It is proposed to use an approach based on fuzzy logic to better evaluate a given emergency situation and to provide a decision maker with best suggestions possible to manage events as they occur.

### Background

Emergency situations are often part of a global distributed system which involves several partners or collaborators and it may be hard to take decisions if only partial information is available. Public security itself is a very vast field. The present specification is more precisely aimed towards decision-making and situation awareness in emergencies like storms, fires, flooding, etc. When such an event occurs, e.g. the flooding of an important river close to city residences, the first decisions which are taken will most probably have a major impact on the way a situation evolves. If the correct steps are taken right away, damages can be very much minimized, but if wrong and uninformed decisions are taken, the worst can be expected. This is why most cities in France, e.g., have what they call "Cellules de Crises Communales". These are somewhat formalized methods developed to help the town mayors to react in case of emergencies. However, those methods still do not provide any precise way to assess a particular emergency situation. Those methods offer the guidelines of how to set up a command post, and then the major preparations to have ready for a quick response. The challenge, however, is the assessment of the available information, and then the selection of the best possible course of action.

### Summary

Decision-making in cases of emergencies is very much information-dependent. When a decision must be taken really quickly with very few or imprecise information, it can become a very complex problem. Quite often, it is very hard to model such a problem in order to solve it computationally since so much information is necessary either from an expert or from previously collected data. Since such a luxury is not always possible, approaches taking this important factor into account have therefore to be considered.

Another interesting point which has to be addressed is related to the fact that an emergency situation is most of the time consisting in a collaboration of many departments like police, medical care, firefighters and more. Somehow, all of these services need to be interconnected and be very well informed of the actions taken. Their own actions will most probably be influenced by the actions of the others, and thus, a very good and clear way of transmitting this information is needed.

In the following there are some explanations of terms used in the present disclosure.

The definition of workflow as given by Hollingsworth D., 1995, Workflow Management Coalition, The Workflow Reference Model (www.wfmc.org) is "... the automation of procedures where documents, information or tasks are passed between participants according to a defined set of rules to achieve, or contribute to, an overall business goal". Basically, a worklfow consists in an often simplified modeling used to clearly and easily illustrate a series of activities which are executed in a specified order from beginning to end. The workflow model will contain the information necessary to indicate which system or actor is doing which task at a given time, and which inputs or outputs are necessary. Workflows can be used to describe an automation of a process like the steps to go through for a creation of a car in a factory, or information process that occurs when a plan for a house loan, basically the possibilities are endless. The tasks executed can be both software and user-based. The reason why workflows are now so widely used is that they provide an easy way to represent the steps of a process clearly enough so that anyone can understand them without having previous knowledge of the system. In the following the terms "workflow" and "workflow model" are to be understood in the same way.

A workflow engine is a software application that is used to manage and execute a previously defined workflow model. It will go through the activities defined in the workflow model and interpret incoming/outgoing events. Several workflow engines are presently available on the web, from very small and limited engines, with only the capacity to go from one activity to another, to very extensive programs that allow for user management, and web-services interactions. A main problem is that many of those workflow engines use either different workflow file formats or implement their own. If several clients decide to work together or cooperate on some project, it may cause many problems and waste much time just to settle and convert to one format. WFMC (Workflow Management Coalition) has tried to solve this issue by creating the so-called XPDL (XML Process Definition Language) format which is basically a set of standards used to describe workflow processes. However, even this format is not yet widely used and so it ends up as being another workflow format amongst the many others.

A workflow management system is a system that contains all necessary components to run a workflow model, interact with workflow participants and invoke external IT applications if needed, i.e. sending e-mails, altering specific services. A typical workflow management system will usually consist of a workflow engine, a database server to store information relevant to the workflow execution, and a messaging feature to possibly interact with other systems. Administrative and supervisory functions will also be usually found on such a system to assign workflow tasks, or provide information about ongoing processes.

A distributed workflow consists in a series of "local" workflows operating in a communicated manner towards a common goal. Several services are interconnected with their corresponding "local" workflows ready to be triggered. Once a local workflow or process is triggered, it will be executed on a corresponding local workflow engine and at the end of the execution, information can be sent back to the triggering distributed workflow if need be. The distributed workflow is to be regarded as a parent workflow of the local workflows.

The problem for finding the best decision in an emergency situation can be described by one important parameter, namely a decision-making in uncertainty. This problem is probably not new, but in the case described hereinafter, it is also needed to account for a second important factor which is a distributed workflow environment.

Many different techniques are presently used in business world for problem-solving and/or decision-making. Solutions like function optimization, rule-based systems, artificial neural networks, all have their place and reason to be. However, in the present disclosure, a detail which makes an application of fuzzy logic to the above-mentioned problem interesting is an integration of uncertainty in a problem/decision which is to be solved. One object of the present disclosure is to define a fuzzy-based decision-making approach for, e.g., common public security scenarios. It is intended to integrate a notion of certainty and confidence in an emergency workflow decision-process so that every decision or choice the proposed system will suggest will be accompanied by a confidence percentage.

An artificial neural network is a possible approach that could be used for finding a best possible solution during an execution of a workflow. However, one main problem that will be encountered in an emergency situation, e.g., is a lack of data to train the respective system. Without an extensive or somewhat complete training set, it can be very hard to correctly set weights for each neurons of the network, even if an expert is available to set up the corresponding system. Training a neural network may also take a lot of times depending on the respective size of the network. Another detail is the fact that a neural network system will not take in linguistic parameters like a fuzzy logic approach would. It is not possible to use terms like "Big", "Small", or "Medium". One would have to directly translate those terms into crisp values which would lead to a loss of valuable information.

Optimization is another technique that may be used in certain situations for decision making. However, in the case of an emergency situation, optimization is simply not related to this kind of problem since there is no function to be minimized by varying appropriate parameters. It is rather intended to trace up a function that describes the decision to take based on given parameters that do not change.

Rule-based systems are closer to what is intended to provide according to the present disclosure. Normally, in the execution of a public security workflow, one possesses various variables, and then take a suggested possible decision based on those variables. This is in fact what rule-based systems are usually used for. However, the rule-based systems lack flexibility of taking in parameters that are vague or imprecise. Of course a very complex set of rules could be elaborated, and that would probably work almost the same as a fuzzy-logic based system. However, this is indeed the reason why fuzzy logic exists, namely to complement a standard rule-based system with continuity and the possibility of having a partial truth, namely a value between completely false and completely true.

Several works like Zirpins, C., Schütt, K., Piccinelli, G., Flexible Workflow Description with Fuzzy Conditions or Adam, O., Thomas, O., Martin, G., Fuzzy workflows -Enhancing Workflow Management with Vagueness propose the use of fuzzy logic to insert uncertainty in workflow execution. However, these works do not take into account emergency systems where timing could also be an important factor in the evaluation of an emergency situation. Moreover, past decisions of other collaborating services are also not considered. Papers like Hong-bo, C. Kai, Z., 2006, Applications of Fuzzy Workflow Nets in Web-based Emergency Command System explore the timing factor in detail by describing an application of fuzzy workflow nets in ECS. However, the present disclosure rather focuses on another problematic, namely the one of distributed processes involving uncertainty levels.

The article from Adam, O., Thomas, O, "A fuzzy based approach to the improvement of business processes" introduces a loan request analyzer using conventional rule-based systems to then replace it with fuzzy logic as an example for business processes. That example clearly shows an improvement of a fuzzy logic system over a crisp rule-based system. However, in that example, a decision to give or not a loan is automatically established by the system. According to the present disclosure it is however intended to give instead some kind of confidence percentages to a user for possible decisions.

Therefore, it is one aspect of the present disclosure to provide a method for supporting a decision-making process in a time critical scenario managed by a distributed workflow comprising a plurality of distributed workflow nodes. The proposed method comprises the following steps:
- assessing a given situation with available information to establish confidence percentages for possible decisions associated with the given situation and the distributed workflow;
- creating and providing a distributed workflow architecture which allows the distributed workflow to use the confidence percentages to enable a decision maker to get knowledge of a best possible course of action when executing the distributed workflow, wherein fuzzy logic is used to compute and maintain the confidence percentages for possible decisions based on the available information.
   The available information can be obtained by gathering information from different information sources which can be spread over huge areas. In the case of an emergency situation, such as a flooding, e.g., more than one riverside town can be involved and, thus, information regarding the flooding can be gathered from all these riverside sites. The available information can be of different kind. All information influencing the given situation can be worthwhile to be gathered. In the case of the above mentioned flooding, e.g., information about the weather, the temperature, the traffic circulation, etc. can be gathered and provided for the fuzzy-based computation of the confidence percentages.

It is also possible that the available information is obtained from a past decision history which is stored in an events database. That means that every evaluation made for decisions is stored in that events database accordingly. That means further that a fuzzy-based computed confidence percentage for a particular past decision is passed as an attribute of a respective last node executed in the distributed workflow. It is saved together with the respective decision as part of a corresponding workflow instance, and, thus, iteratively, the latest workflow instance of the distributed workflow always contains the whole history of the "fuzzy decisions", i.e. the past decisions made associated with their respective previously fuzzy-based computed confidence percentages. The provision to store decision confidence percentages in a respective workflow instance file allows for a later reviewing of past decisions, and let a user or decision maker take a decision with that information in mind. Transmitting fuzziness of the last workflow node executed allows for including this element as part of the available information for computing a current workflow node fuzzy evaluation, i.e. its respective confidence percentage. Generally, a workflow instance is to be understood as an incarnation of a respective workflow model, consisting of a current state and a mapping which assigns values to all respective state variables. Thus, a history of a worklfow instance contains a list of all versions of the instance.

The available information can also be obtained from an expert system.

It is also possible according to a further aspect of the present disclosure that the available information is obtained from services which are involved in mastering the given situation. This allows for a good cooperation between services since each service can view the other's motivations for taking certain decisions. In the case of an emergency situation, e.g., a police department can view why it is alerted before deciding how to prepare for responding to a corresponding call.

According to another aspect of the proposed method particular variables characterizing the given situation are established and weighted with an uncertainty factor, respectively, by using the available information. The weighted variables are further cumulated according to prescribed fuzzy-based rules resulting in computing and maintaining the confidence percentages for the possible decisions. Thus, fuzzy logic can be applied to every possible step of the distributed workflow process to obtain corresponding confidence percentages. In the case of an emergency situation such variables could be, e.g., "wounded" as a coefficient indicating the severity of the emergency situation concerning injured or killed people, "accessibility" as a coefficient indicating the ease of access to the respective emergency site. Those variables are associated, according to fuzzy logic, with a so-called membership function. Each variable can be characterized by an imprecise adjective, such as "high" for a number of wounded people. A membership function then states a degree of membership of a particular value to the characterization "high". That means that a membership function defines a mapping between elements of a ceratin set and values in the interval [0,1].

It is possible that the confidence percentages for every one of the possible decisions are stored and compiled, as needed, to help the corresponding decision maker. Generally, all services which are involved in mastering the given situation are associated with at least one workflow node of the distributed workflow.

According to a further implementation of the proposed method, relevant information is, whenever a new event occurs, automatically passed to all services which are involved in mastering the given situation, thus allowing for a good monitoring of the given situation at every step of action.

Another aspect of the present disclosure is to provide a workflow management system for supporting a decision-making process in a time critical scenario which is to be managed by a distributed workflow. The system comprises at least one local workflow engine that is configured to execute a current local workflow and to use fuzzy-logic to compute, based on available information, confidence percentages for possible decisions associated with a given situation and a distributed workflow, a workflow viewer that is configured to display the current local workflow execution and a distributed workflow history with corresponding associated confidence percentages as a weighted decision tree, and to dynamically update the distributed workflow as events occur, a messaging interface that is configured to act as an adapter between the at least one local workflow engine and a central messaging system, the central messaging system being configured to orchestrate communication within the distributed workflow, and to record the distributed workflow execution, and between the at least one local workflow engine and an events database that is configured to store instances of the distributed workflow and the computed confidence percentages.

According to a further possible implementation of the proposed system, the system further comprises a past decision analyzer that is configured to cumulate past decision confidence percentages and to provide such past decision confidence percentages responsive to a corresponding request. The past decision analyzer can be connected to the at least one local workflow engine via the messaging interface. Thus, the local workflow engine can send requests to the past decision analyzer.

It is possible that the past decision analyzer is further configured to re-analyse, on each request, the corresponding distributed workflow instance to compute the cumulated confidence percentages to a desired depth.

In a further embodiment of the proposed system the local workflow engine further comprises a fuzzy logic library.

It is also possible that the messaging interface is further configured to translate messages received from the local workflow engine into a standard messaging format to store the corresponding distributed workflow instance together with corresponding confidence percentages into the events database.

Furthermore, it is possible that the messaging interface is further configured to transmit every event that occurs in the workflow execution.

The messaging interface can further be configured to act as an adapter between the past decision analyzer and the central messaging system, particularly to transmit requests for information from the past decision analyzer to the central messaging system and forward the respective answers.

The system as proposed can also have, according to another implementation, a plurality of local workflow engines, each of those local workflow engines being configured to execute one local workflow as a part of the distributed workflow. That means that the distributed workflow may comprise a plurality of sub-workflows, each of which is to be executed by one of the plurality of local workflow engines when a respective workflow node of the distributed workflow is reached during workflow execution. The execution of the distributed workflow as the parent workflow is suspended while the sub-workflow is executing. It is resumed once the execution of the respective sub-workflow has ended.

The present description also covers a computer program with program coding means which are suitable for carrying out a method according to the disclosure as described above when the computer program is run on a computer. The computer program itself as well as stored on a computer-readable medium is claimed.

Another aspect of the present disclosure is the use of the described system or of the described method for supporting a decision-making process in a public security scenario, particularly in an emergency workflow. By means of the proposed method and the proposed system, respectively, it is possible to assess the gravity of an emergency situation with available information to establish confidence percentages for possible decisions. Furthermore, the distributed workflow architecture as created and provided by the proposed method allows a distributed workflow to use confidence percentages to enable a decision maker to possess good knowledge of a current situation status. According to a proposed implementation a decision maker is provided with access to a past decision history for a full assessment of the given emergency situation. Since the proposed method and the system are based on the use of fuzzy logic in a decision making process in a distributed workflow, the concept of fuzzy logic will be first briefly introduced in the following.

Although, the first paper on fuzzy logic was published in 1965 by Prof. Lotfi A. Zadeh, 1965, "Fuzzy Sets", Information and Control, 8, p. 338-353, mentions of such concepts were first attributed to Plato who suggested that there was a third region between true and false. A main concept behind fuzzy logic relies on imprecise logic, or more precisely on an interval between the 0 and 1 boolean logic.

A common example used to illustrate a concept of vagueness or imprecise logic is temperature. If one qualifies a temperature 25°C of hot, it may also be considered as being very warm to a certain degree. The idea behind this is to have functions describing the degree of membership of a value to a certain vaguely defined set. Normally, with crisp logic, one would elaborate rules of the following type:
- If temperature is less than 0, weather is cold.
- If temperature is between 0 and 15, weather is warm.
- If temperature is higher than 15, weather is hot.

However, these intervals do not accurately describe the qualifiers "cold", "warm" and "hot". What is proposed by fuzzy logic in a first step is to establish a degree of membership of a specific value to all of these vaguely defined sets (qualifiers) by defining membership functions. Therefore, a temperature of 25°C could be considered as having a membership of e.g. 0,2 to the "hot" temperature, and 0,7 to the "warm" temperature. One advantage in using those membership functions is that they can be defined very individually so that it exactly models the realm of solutions which are tried to be displayed. One can also define learning mechanisms to modify those membership functions and then create a model that will be much more precise and accurate.

Fuzzy logic allows for set membership values to range inclusively between 0 and 1, and in its linguistic form, imprecise concepts like "slightly", "quite" and "very". Specifically, it allows partial membership in a set, as described beforehand. Generally fuzzy logic is applied by defining fuzzy operators and fuzzy rules, respectively, on fuzzy sets.

Usually Fuzzy logic uses IF/THEN rules or equivalent constructs. For a given value, such as the above mentioned temperature value of 25 °C, generally, all rules are evaluated because the temperature might be "warm" and "hot" at the same time to differing degrees. There are different approaches to implement fuzzy logic with its facilities to set up a database of fuzzy rules which are to be queried to deduct logic.

Once fuzzy rules are defined, fuzzy relational databases can be developed. There are different such databases known in the art.

According to the proposed method of the present disclosure a distributed workflow architecture is created and proposed that computes and maintains fuzzy-based recommendations done by a corresponding system to a decision maker. According to what has been described in the connection with the prior art, up to now, research was focused on fuzzy rule engines, but not on workflows, and on non-distributed rule engines when fuzziness comes into play.

Further features and embodiments will become apparent from the description and the accompanying drawings.

It will be understood that the features mentioned above and those described hereinafter can be used not only in the combination specified but also in other combinations or on their own, without departing from the scope of the present disclosure.

Various implementations are schematically illustrated in the drawings by means of an embodiment by way of example and are hereinafter explained in detail with reference to the drawings. It is understood that the description is in no way limiting on the scope of the present disclosure and is merely an illustration of a possible embodiment.

### Brief Description of the Drawings

In the drawings,
Figure 1 is an example workflow for which an implementation of the proposed system can be applied;
Figure 2 is an expanded view of one workflow node of the workflow of Figure 1, the workflow node representing an "analyse gravity" task;
Figure 3 is an expanded view of a further workflow node of the workflow of Figure 1;
Figure 4 is a schematic diagram of a possible embodiment of the proposed system;
Figure 5 is a sequence diagram illustrating an implementation of the proposed method; and
Figure 6 illustrates membership functions for three different variables influencing an emergency situation.

### Detailed Description

In the following, an emergency situation workflow is defined to be used as an example for an implementation of an embodiment of the proposed method or an embodiment of the proposed system. As a somewhat common scenario fire is chosen since much information is available to construct a realistic case. Furthermore, it is a very good example since it is exactly this kind of situation where various parameters which are usually provided are not crisp or precise. The answers which are to be answered in order to find a decision may be the following:
- How big is the fire?
- Is it under control?
- Are there any casualties?
- How is the climate, it is helping/worsening the situation?
- Are there enough troops available to fight the fire?
- Is there a need to evacuate?

A person in charge, usually someone assigned by a mayor, gathers relevant information to then inform the mayor so that the mayor can take an informed decision, either to continue and to try to solve the problem with local resources or contact the préfet and ask for help from nearby towns. Many french cities, e.g., have a so-called PCS (Plan Communal de Sauvegarde). It is desirable now to add a fuzzy feature that can be transferred into the various local workflows and procedures of those cities. All those local workflows form an overall distributed workflow in the sense of the present disclosure.

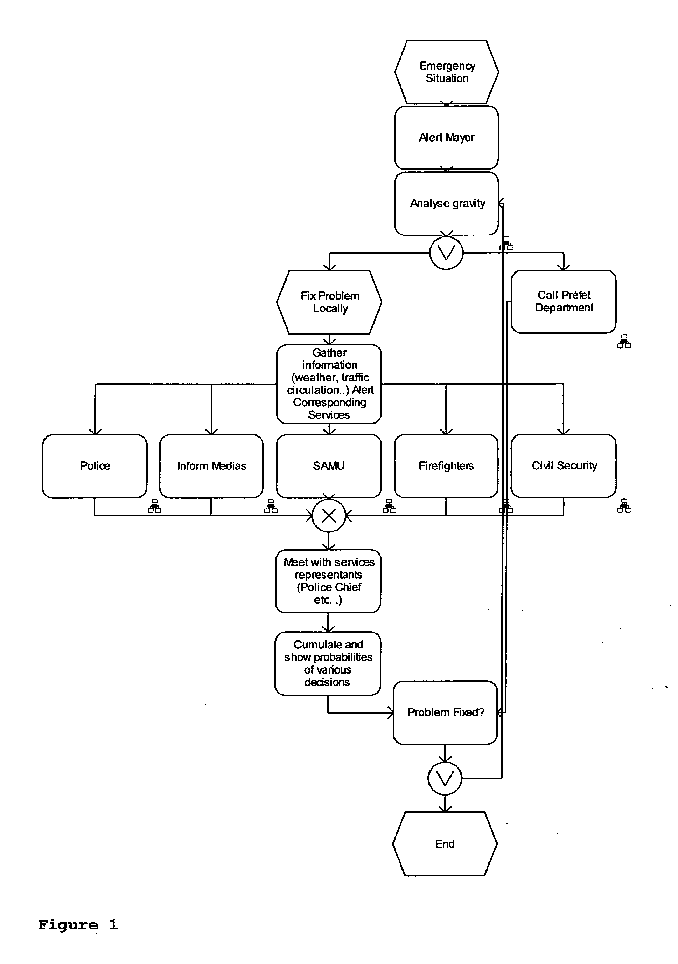

According to the proposed method there are various places/nodes within the workflow where fuzzy logic is to be applied as it can be seen in Figure 1.
Figure 1 shows the different tasks which are to be solved and the different services which are to be used for mastering the emergency situation, in the shown case "fire". The first place/node where fuzzy logic is to be applied is the "Analyse Gravity" task/node of the workflow.

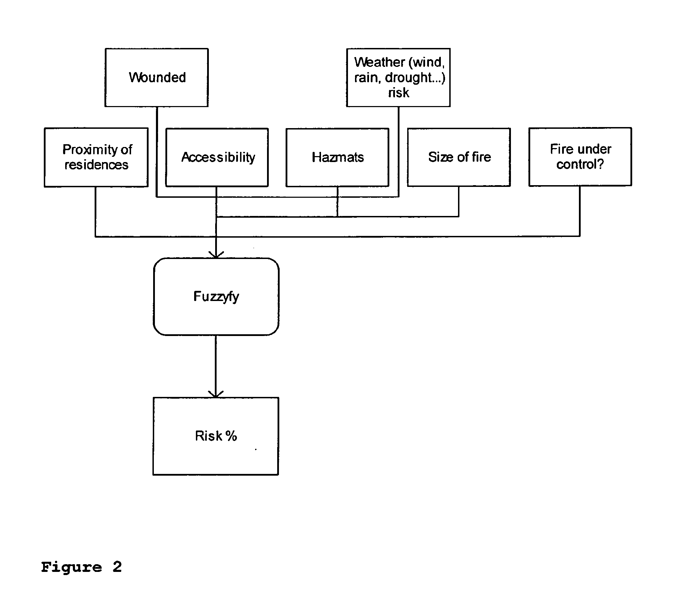

For doing this, the "Analyse Gravity" task/node is to be expanded as shown in Figure 2. As can be seen in Figure 2, each factor influencing a possible outcome of the emergency situation is modeled as an input that is fuzzified depending on its magnitude, to be then used as a firing element for respective fuzzy rules. Therefore, the factors "proximity of residences", "wounded people", "accessibility of the fire site", "hazmats", "weather", "fire size", and "fire under control?" are each weighted using available information from different information resources. That means that each of those factors is "fuzzified". Using corresponding fuzzy rules by taking into account all of those fuzzified factors leads to a specific risk assessment.

The proposed system allows to inform each and every necessary person of the gravity of the given situation for the duration of the emergency. The proposed system enables an analysis of the given situation even if information is missing and gives a possibility for a user to add or remove parameters contributing to a specific decision.

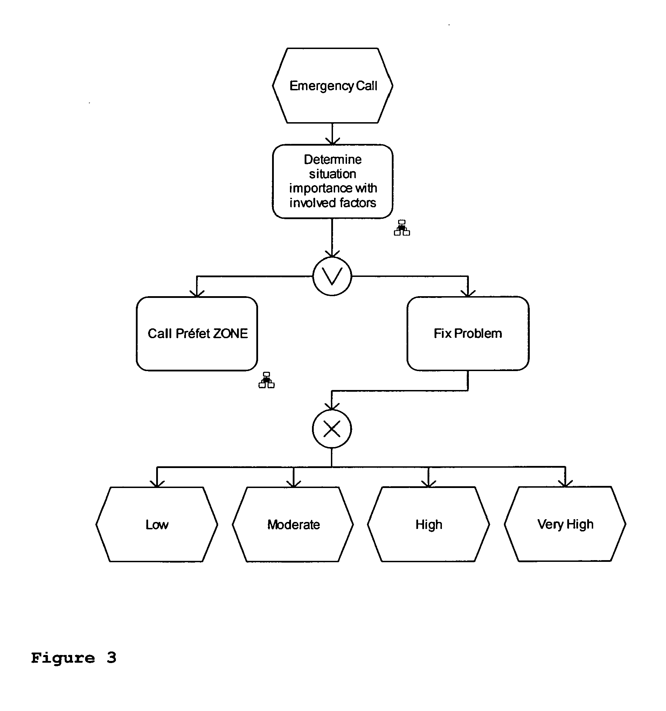

The illustration shown in Figure 3 displays the given situation as respresented by the workflow of Figure 1 in the case where the préfet has to be contacted, so that this node of the workflow of Figure 1 is expanded as shown. Here the given situation is again assessed with available information which in this case may be coming from several neighborhood towns or areas. The severity of the given situation to take action is then decided. Since there are several workflows collaborating and a decision is to be taken based on information obtained from these collaborating workflows, fuzzy values are also used that were calculated previously in those workflows to better decide the best procedure to follow.

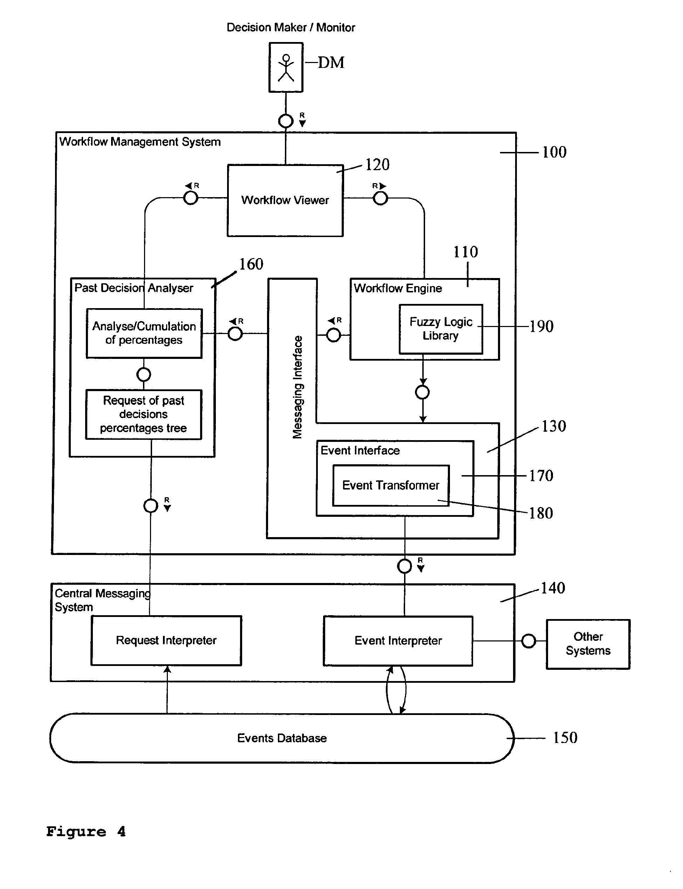

Figure 4 shows a possible embodiment of a workflow management system as proposed in the present disclosure. The workflow management system 100 is configured to support a decision-making process in a time critical scenario which is to be managed by a distributed workflow. The workflow management system 100 comprises at least one workflow engine 110. The at least one workflow engine 110 is configured to execute a current local workflow and to use fuzzy logic to compute based on available information, confidence percentages for possible decisions associated with a given situation, e.g. an emergency situation, and the distributed workflow. The workflow management system 100 further comprises a workflow viewer 120 that is configured to display a current local workflow execution and a distributed workflow history with corresponding associated confidence percentages as a weighted decision tree. Furthermore, the workflow viewer 120 is configured to dynamically update the underlying distributed workflow as events occur. The workflow management system 100 further comprises a messaging interface 130 that is configured to act as an adapter between the at least one workflow engine 110 and a central messaging system 140, the central messaging system 140 being configured to orchestrate a communication within the distributed workflow and to record the distributed workflow execution. The workflow management system 100 is further connected to an events database 150 that is configured to store instances of the distributed workflow and the computed corresponding confidence percentages. A decision maker DM has the ability to consult the workflow viewer 120 to take a decision in a current local workflow execution. The workflow viewer 120 can display the current local workflow execution, and the history of the underlying distributed workflow with associated confidence percentages as a weighted decision tree.

Furthermore, a workflow designer has the possibility to configure by consulting the workflow viewer 120 appropriate weights for the needed confidence computation algorithms, e.g. by means of appropriate membership functions. The confidence computation algorithms are stored in and retrievable from a fuzzy logic library 180. The workflow designer is able to define and configure membership functions, each mapping a vaguely defined set. Such a set could be, for example, "warm", "hot" or "very hot" in the case of a temperature scale. In this example, a point on the temperature scale, that means a specific temperature value, as for example 25°C has three "truth values", i.e. intersection points, namely one for each of the three membership functions. The intersection point with the membership function "warm" can be (25°C, 0,7), the intersection point with the membership function "hot" can be (25°C, 0,2) and the intersection point with the membership function "very hot" can be (25°C, 0,0) These three truth values could be interpreted as evaluating that particular temperature of 25°C as being "fairly warm", "slightly hot" and "not very hot".

The workflow management system 100 further comprises a past decision analyzer 160. The past decision analyzer 160 is a module that answers to questions and requests from the workflow engine 110, or from the workflow viewer 120 for past decision trees, that means for corresponding confidence percentages. On each such request, the past decision analyzer 160 can re-analyze a distributed workflow instance to compute the cumulated probabilities/confidence percentages to a desired depth. In order to answer to the requests from the workflow engine 110 or the workflow viewer 120 and to re-analyze a distributed workflow instance, the past decision analyzer 160 contacts the central messaging system 140 in order to get the requested distributed workflow history. The central messaging system 140 acts thereby as an interface between the events database 150 and the past decision analyzer 160 which needs history information. The events database 150 stores the instances of the distributed workflow and the computed fuzzy probabilities, that means the computed confidence percentages for such workflow instances which have already been executed. The events database 150 returns the requested workflow instance together with corresponding confidence percentages which are added to the respective workflow instance as attributes, to the central messaging system 140. The central messaging system 140 acting as an interface between the events database 150 and the past decision analyzer 160 forwards the corresponding workflow instance to the past decision analyzer 160. The past decision analyzer 160 can then compile the past decisions and rebuild a decision tree by taking into account the past decisions. The workflow viewer 120 or the workflow engine 110 which have requested for a past workflow history (i.e. a past decision history) can now take into account such information in order to update the current weighted decision tree by taking into account a current emergency status as well as the past decision history.

The workflow management system 100 further comprises, as already mentioned, a messaging interface 130 which comprises an event interface 170 including an event transformer 180. The messaging interface 130 can be **characterized in that** the messaging interface 130 has two different roles. First, the messaging interface 130 acts as an adapter between the workflow engine 110 and the central messaging system 140. Messages received from the local workflow executed by the workflow engine 110 are translated into a standard messaging format in order to store the respective distributed workflow instance and its corresponding certainty percentages (confidence percentages) into the events database 150. This interface 130 transmits every event that occurs in the workflow execution.

Second, the messaging interface 130 acts as an adapter between the past decision analyzer 160 and the central messaging system 140. This messaging interface 130 transmits requests for information from the past decision analyzer 160 to the centralized messaging system 140 and forwards the corresponding answers.

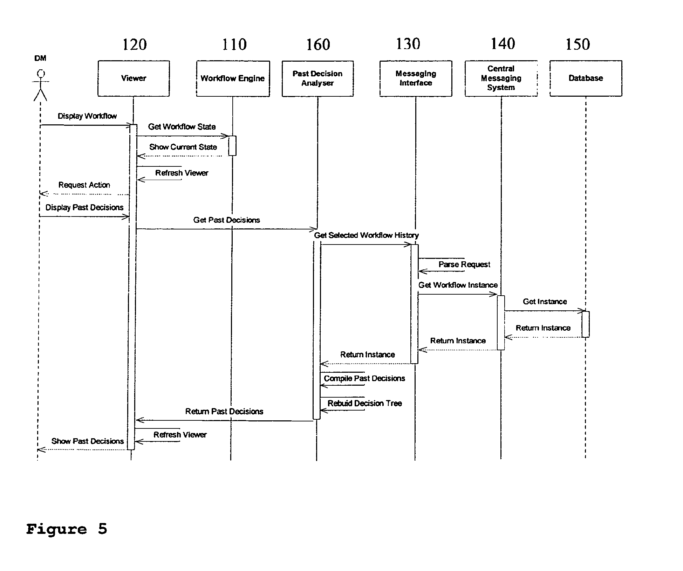

Figure 5 shows a sequence diagram illustrating an interrelationship between the different components of the system as shown in Figure 4 in a specific status of an emergency situation. On the left hand side a decision maker DM is shown which asks in a first step a workflow viewer 120 to display a corresponding distributed workflow which is associated with the respective given emergency situation. In reaction to such a request of the decision maker DM, the workflow viewer 120 asks a workflow engine 110 to get a current workflow state. In reaction thereto, the workflow engine 110 shows the current state to the workflow viewer 120. The workflow viewer 120 then refreshes its display accordingly. The refresh of the display of the workflow viewer 120 has as a consequence a request of an action which has to be decided by the decision maker DM. Before making a decision, the decision maker DM asks the workflow viewer 120 to display past decisions for that a decision making is facilitated. The workflow viewer 120 then asks a past decision analyzer 160 to get past decisions. The past decision analyzer 160 requests a central messaging system 140 via a messaging interface 130 to get a selected workflow history. Before the request for the selected workflow history is forwarded to the central messaging system 140 the request is parsed by the messaging interface 130 which acts as an intermediate between the past decision analyzer 160 and the central messaging system 140. The messaging interface 130 then asks the central messaging system 140 to get a corresponding workflow instance. The central messaging system 140 forwards this request for the workflow instance to an events database 150. The events database 150 which stores all the corresponding workflow instances together with respective confidence percentages which are added to the respective workflow instance as attributes, returns the requested workflow instance. The central messaging system 140 forwards the received workflow instance to the messaging interface 130. The messaging interface 130 forwards the received workflow instance to the past decision analyzer 160. The past decision analyzer 160 retrieves from the returned workflow instance the past decisions which have been requested by the workflow viewer 120. The past decision analyzer 160 compiles the past decisions and rebuilds a decision tree. The updated weighted decision tree is then returned to the workflow viewer 120. On the basis of the received past decisions the workflow viewer 120 refreshes its workflow viewer display so that the past decisions are shown to the decision maker DM. On the basis of this information shown at the display of the workflow viewer 120 the decision maker DM is now able to make a decision much more easier than without such information.

In a specific scenario managed by a distributed workflow there are generally different components of an overall system which are responsible to execute a specific part of the distributed workflow. The distributed workflow can be designed as a workflow with a plurality of workflow nodes. Each node represents a specific task which has to be executed during workflow execution. In the case of an emergency situation such as a fire, it is imaginable that there are different components, each of which has to execute a specific task. Each of those tasks may correspond again to a specific local workflow, those local workflows together, thus, building the overall distributed workflow. The distributed workflow is pre-configured and stored so that each component can access the stored distributed workflow. In case of an emergency situation a distributed workflow associated with such an emergency situation cannot be executed task by task without taking into account the dynamic character of the emergency which requests for fast and spontaneous decision before each step/node of the distributed workflow. In order to facilitate those decisions in each step of the distributed workflow, each workflow node of the distributed workflow is weighted dynamically by a specific confidence percentage which is calculated dynamically based on fuzzy logic. That means that during the execution of the distributed workflow by means of a plurality of local workflow engines, each local workflow engine being responsible for the execution of a specific workflow node of the distributed workflow; is capable of calculating the confidence percentages for the distributed workflow after having executed its respective workflow node. That means that the confidence percentages are always updated whenever the situation of the emergency changes. In order to do this, the workflow engine does not take into account only the actual status but also information obtained by other workflow engines and of a past decision history. The whole history of a fuzzy-based decision is always passed as an attribute of the workflow node which has been executed as the latest.
This is saved as part of the corresponding workflow instance and iteratively the latest workflow instance always contains the whole history of the fuzzy-based decisions. The fuzzy-based decisions associated with a specific workflow node are always transmitted after the execution of that node to the next workflow node which allows for including this fuzzy-based decision as part of variables for computing confidence percentages for that current workflow node. That means that a fuzzy-based evaluation is made for each workflow node before its execution, the fuzzy-based evaluation taking into account a past decision history as well as current available information. Retrieving such fuzzy-based decisions as part of a past history is realized by the proposed past decision analyzer.

The workflow engine 110 as shown in Figure 4 comprises a so-called fuzzy logic library 180. In the art there exist many open source libraries which are freely available. For example, the so-called FuzzyJToolkit^{(™)} library can be selected amongst various choices. This kind of library has all necessary features for an easy implementation. For an implementation of a fuzzy logic library a lot of rules are usually necessary, especially if there are two or three input variables. Therefore, it depends on the specific scenario which is to be supported which kind of fuzzy logic library has to be used and implemented. It is possible that rules for a fuzzy logic evaluation are coded in a separate text file to be read once upon a loading of a corresponding workflow in order to provide an easy plug and play of different rule-sets.

As a workflow engine 110, a so-called Bonita^{©} engine can be used that possesses several terms to describe an execution of a workflow process. Bonita^{©} is a special kind of workflow engine. Therefore, in order to facilitate an understanding of several terms as well as functionalities of the workflow engine called Bonita^{©}, the following terms are explained as follows.

An activity in this kind of workflow engine is considered as an execution of one node of the workflow model. An activity will contain some information concerning the task that is to be executed by a user assigned to the task, and inputs or outputs that are to be processed.

A process is a set of activities linked together which will be executed by the workflow engine.

A so-called Hook is a java class that is executed when going through an activity. The workflow engine called Bonita^{©} allows the Hook to be launched upon entering the activity or when leaving it.

A transition is a link that will join two activities together. Conditions may be set to specify constraints for these relationships.

Saving a workflow instance for collaboration or communication between local workflows which are distributed to different services, forming together the overall distributed workflow, may, at first, look like a trivial functionality. However, such a feature is, e.g., not part of the workflow engine called Bonita^{©} 3.0. It is currently possible to access an history of an executed workflow process but only once this process has been executed totally. Since many workflow engines use different representations for their workflows, most of them have developed their own methods for saving these workflow instances. The WFMC (Workflow Management Coalition) has developed WAPI (Workflow Application Programming Interface) which is actually an API (Application Programming Interface) for saving workflows but still no real standards exist. A possible and quick solution to save the workflow instances which are to be sent to a centralized events database for storage is to read an XPDL (XML Process Definition Language) model in a DOM (Document Object Model) tree and then update values of the model as the execution of the distributed workflow progressed. A Hook that would be called on the execution of every node in the workflow engine is created to modify the values in the loaded DOM tree to store that file as a local workflow instance and to also publish this new workflow instance to the centralized events database via a corresponding JMS (Java Message Service) topic that was set for this respective task.

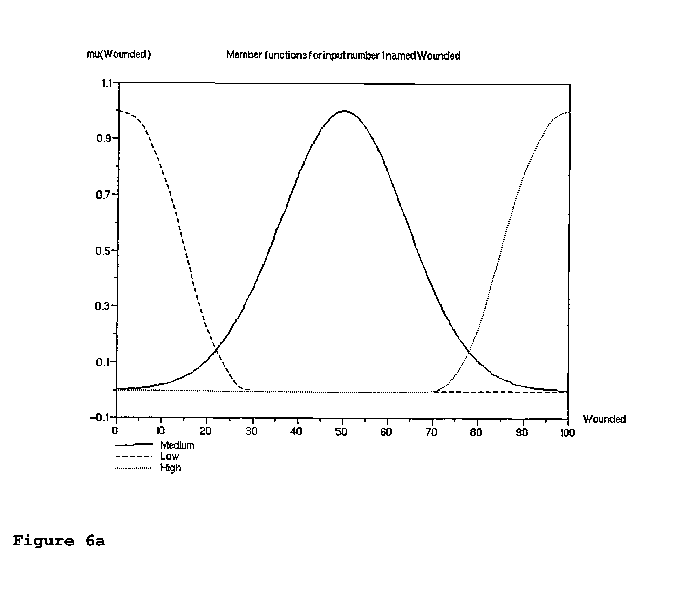

It is intended according to the present disclosure to apply fuzzy logic to every possible step/node of the overall distributed workflow to obtain confidence percentages for each decision to be made if possible. For the example scenario of a fire, variables are established to compute a corresponding evaluation of the severity of the situation. One of these variables can be chosen to be "wounded". This is a coefficient indicating the severity of the situation concerning injured or killed people. Figure 6a shows three membership functions corresponding to a "high", a "medium" and a "low" severity, respectively. On the x-axis a relative quantity of wounded persons is indicated. The curves/membership functions shown indicate the severity of the situation in dependence of the quantity of wounded persons. The function indicated by dashed lines represents that the severity of the situation is "low". The curve indicated by continous line indicates that the severity of the situation is "medium". Finally, the curve indicated by dotted line shows that the severity of the situation is to be regarded as "high". A relative quantity of wounded persons of "20" is to be interpreted with respect to the severity of the situation that the severity is 0.1 "medium", 0.2 "low" and 0.0 "high".

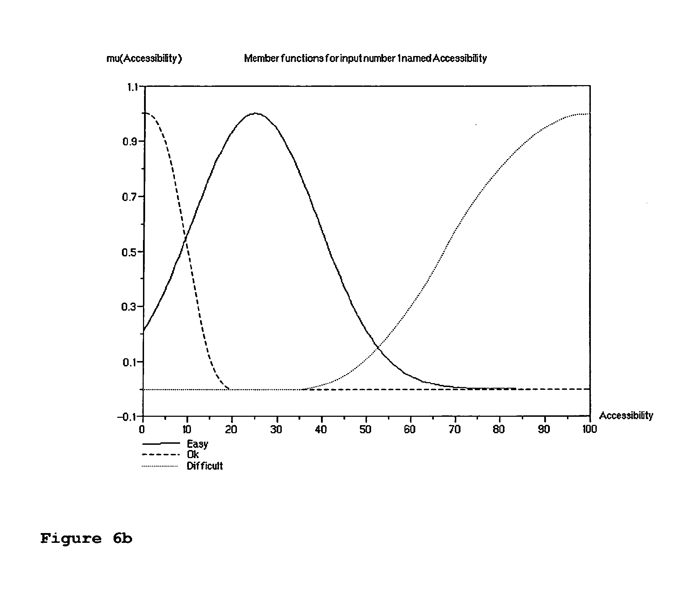

Figure 6b shows a further coefficient, namely accessibility, a coefficient which indicates the ease of access to the site of the emergency. It indicates how easy the site can be reached for fast control of the fire. The curve indicated by dashed line represents the case that the accessibility is "ok". The curve indicated by continous line represents the case that the accessibility is "easy". Finally, the curve indicated by dotted line represents the case that the accessibility is "difficult".

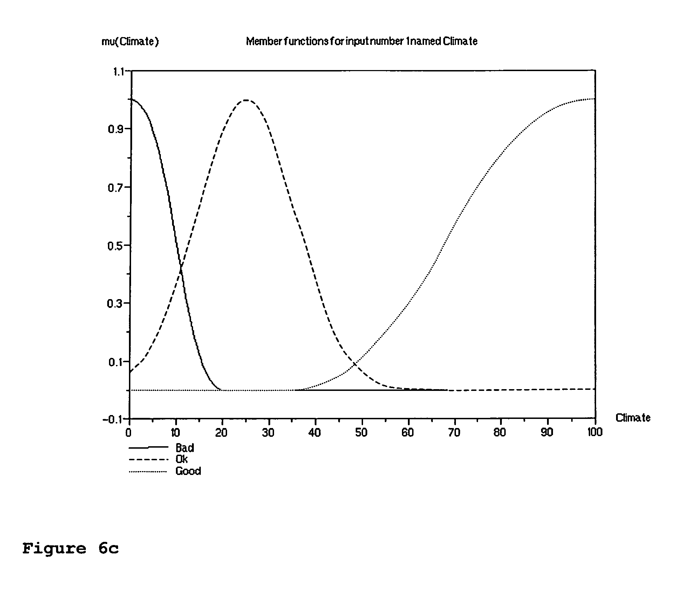

Figure 6c shows the severity of the situation in dependence of the climate. The climate chosen as a coefficient indicates the impact of the climate on the fire. Rain could be of help in the situation, wind could reverse it in the case of a wild forest fire. The curve indicated by continous line shows that the impact of the climate is "bad". The curve indicated by dashed line shows that the impact of the climate on the severity of the situation is "ok" and the curve indicated by dotted line shows that the impact of the climate on the severity of the situation is "good".

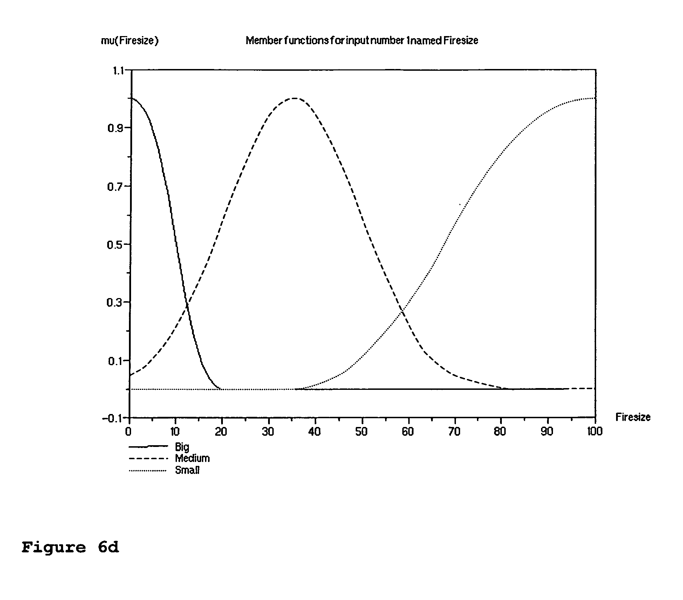

Figure 6d shows the influence of the fire size on the severity of the situation. If the fire is really big, for example, many resources might be needed and the local town might not be equipped with enough fire trucks or firefighters to get control of the emergency situation. The curve indicated by continous line is defined as "big". The curve indicated by dashed line represents the case of "medium" and the curve indicated by dotted line represents the case of "small".

The conclusion of the fuzzy rules is established in the same way by defining a membership function with parameters like "high, medium, low" and the strength with which the rules will be fired. In the case of the above mentioned example, a severity value is estimated between 0 and 100. The rules used for this evaluation can be of the following format:

IF wounded = high AND accessibility = difficult AND climate = bad AND fire size = small THEN result = high
That means that the severity of the situation is evaluated, according to the applied fuzzy rules, as being "high".

The past decision analyzer as provided in the present disclosure is a module on the described distributed workflow architecture that has for a main purpose to cumulate past decision confidence percentages to provide a good situation assessment of a present decision while still taking into account past history. One goal of this module is to allow a system user, i.e. the decision maker, to give certain weights to every past decision, so that he can chose their influence on a current decision. The past decision analyzer as a part of the workflow management system as proposed in the preceding parts of the description will request information on a centralized events database which has stored confidence percentages for every decision and then compile that information to help the decision maker to proceed to the next step/node of the underlying distributed workflow.

The proposed messaging system used in connection with the proposed workflow management system can be based e.g. on the known JMS topic subscribe/publish scheme. The JMS topic is a service that will be deployed to wait for incoming messages, and then transmit those messages to subscribed clients. In this way, whenever a new event will occur on a collaborating partner, the relevant information will be passed to all other subscribed services and stored on the corresponding centralized events database, allowing for a good monitoring of a given situation as, e.g., an emergency situation at every step of action.

By means of the proposed approach in the present description for decision making, e.g., in public security situations, the problematics related to distributed workflow systems and imprecise or incomplete information at decision time could be solved. The implementation of fuzzy logic evaluations in distributed workflow systems facilitate a decision making in time critical situations such as an emergency scenario. Every evaluation made for decisions is stored on a centralized events database. Such an addition of a variable to store decision confidence percentages in a workflow instance file allows for a later reviewing of past decisions and let a user take a decision with that information in mind. This allows a very good cooperation between services since each service can view the other's motivation for taking certain decisions. A police department can then view why it was alerted, decide how to prepare for responding to a respective call. The concept proposed in the described architecture provides a good model for distributed workflow systems requiring constant situation awareness, and thus a capability to integrate uncertainty factors in every decision analysis.

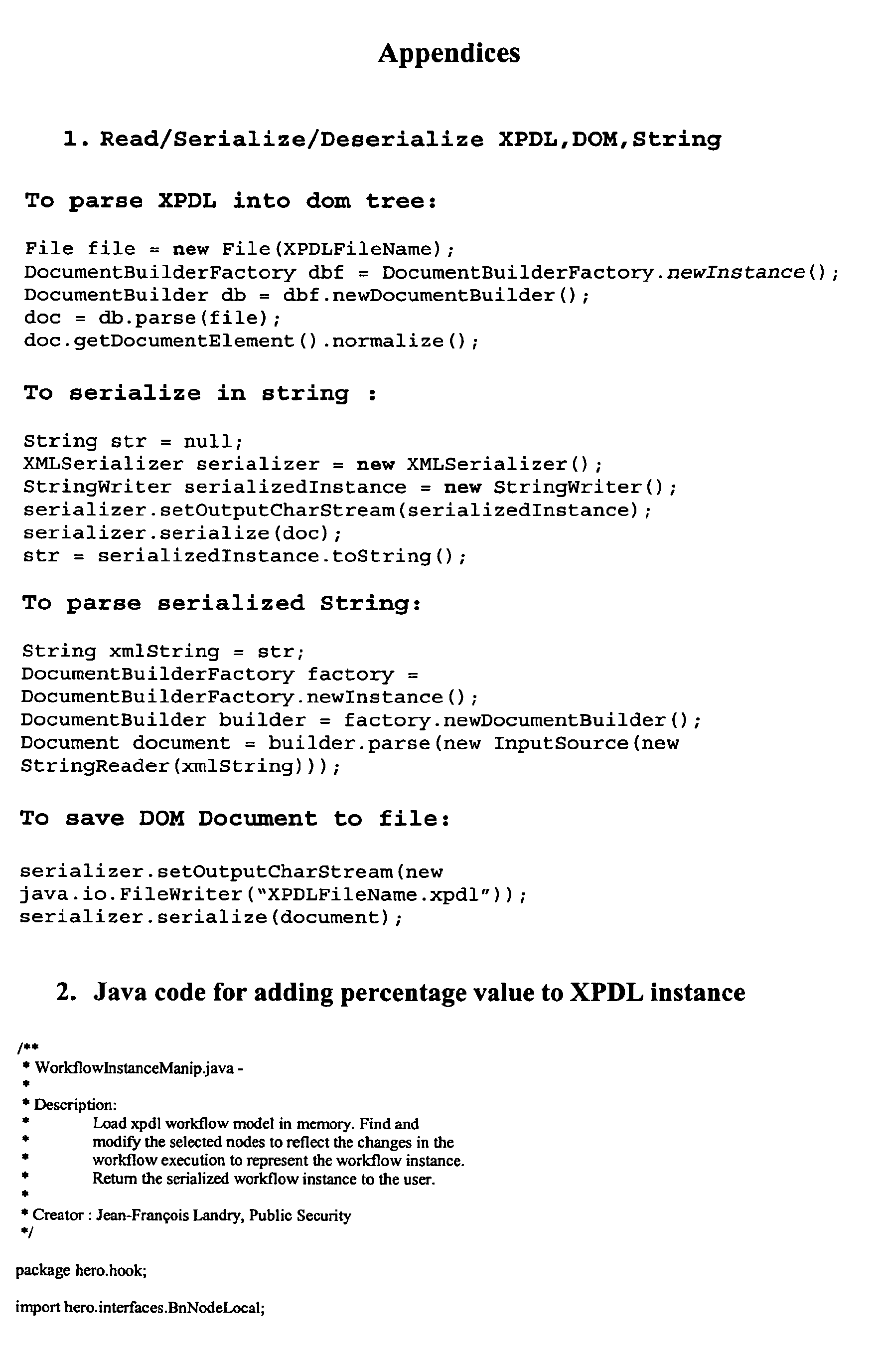

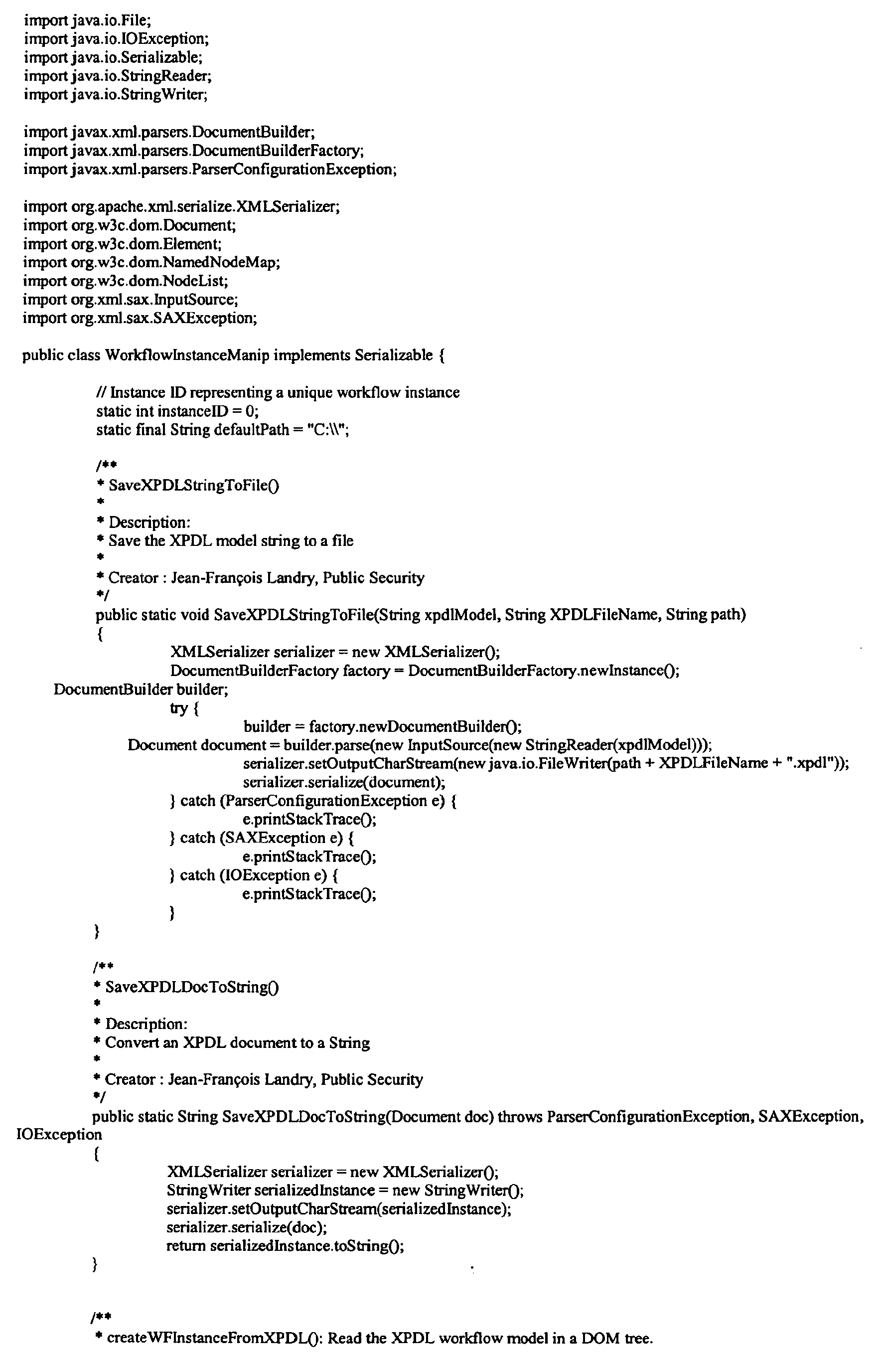

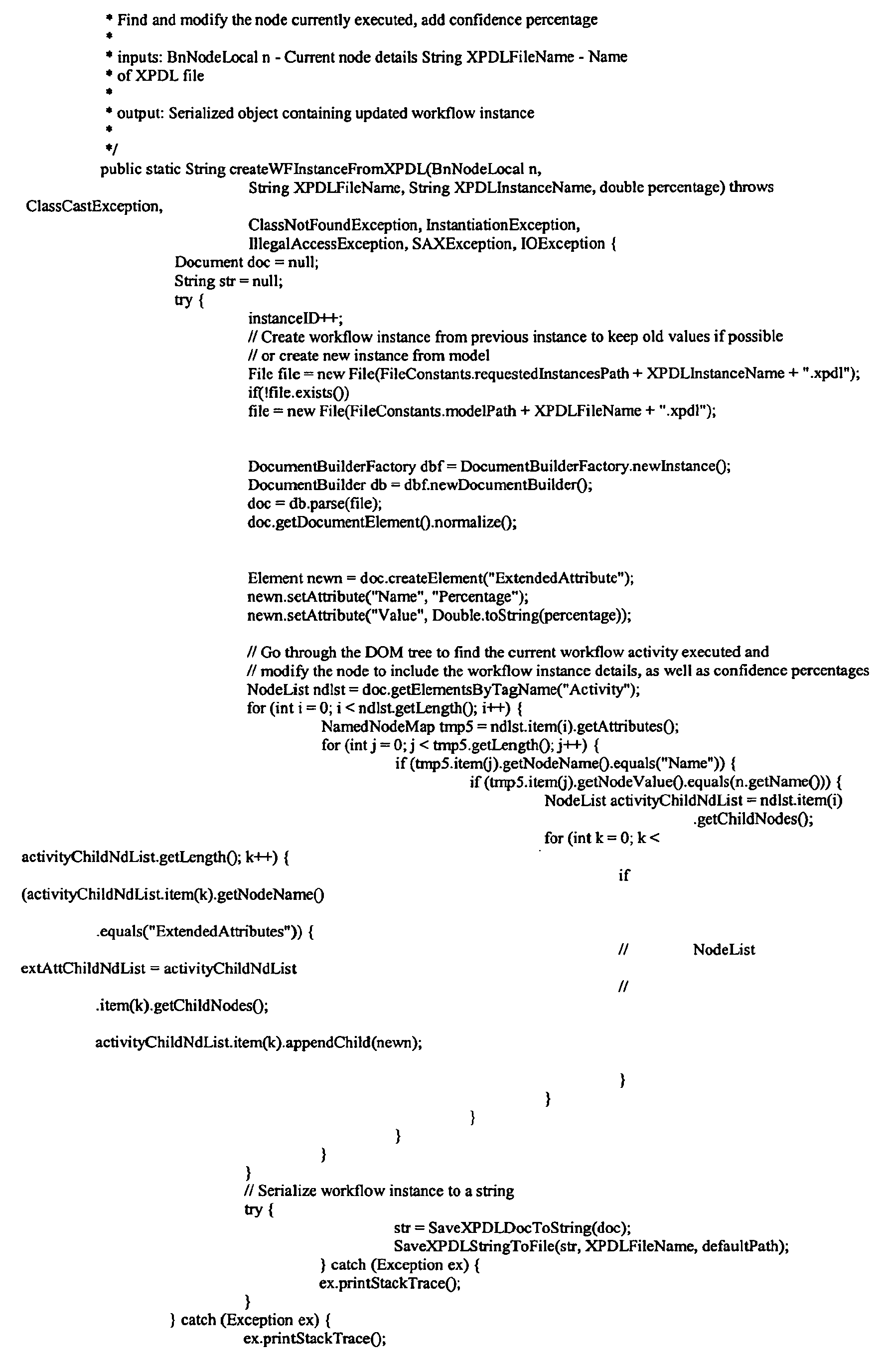

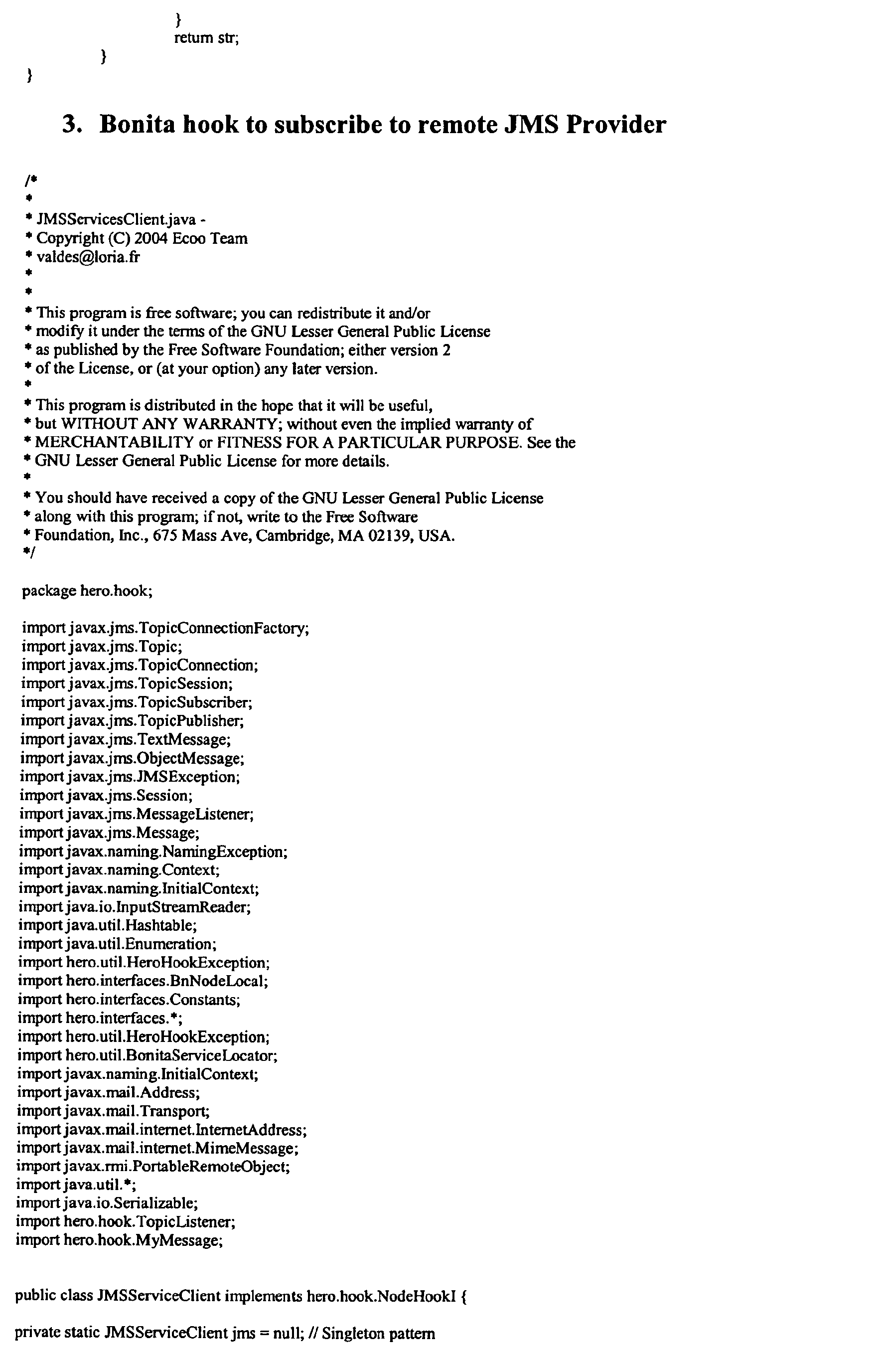

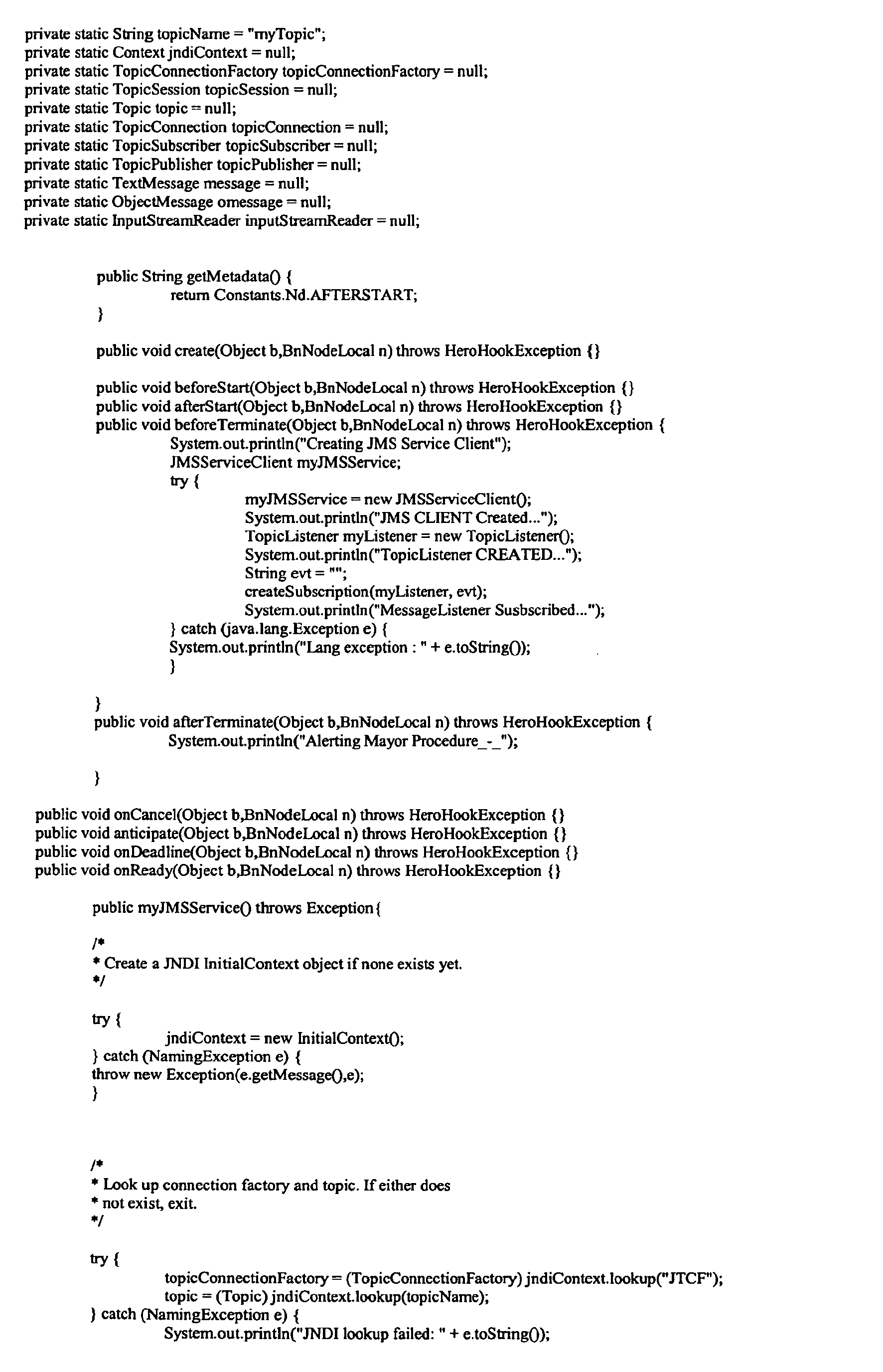

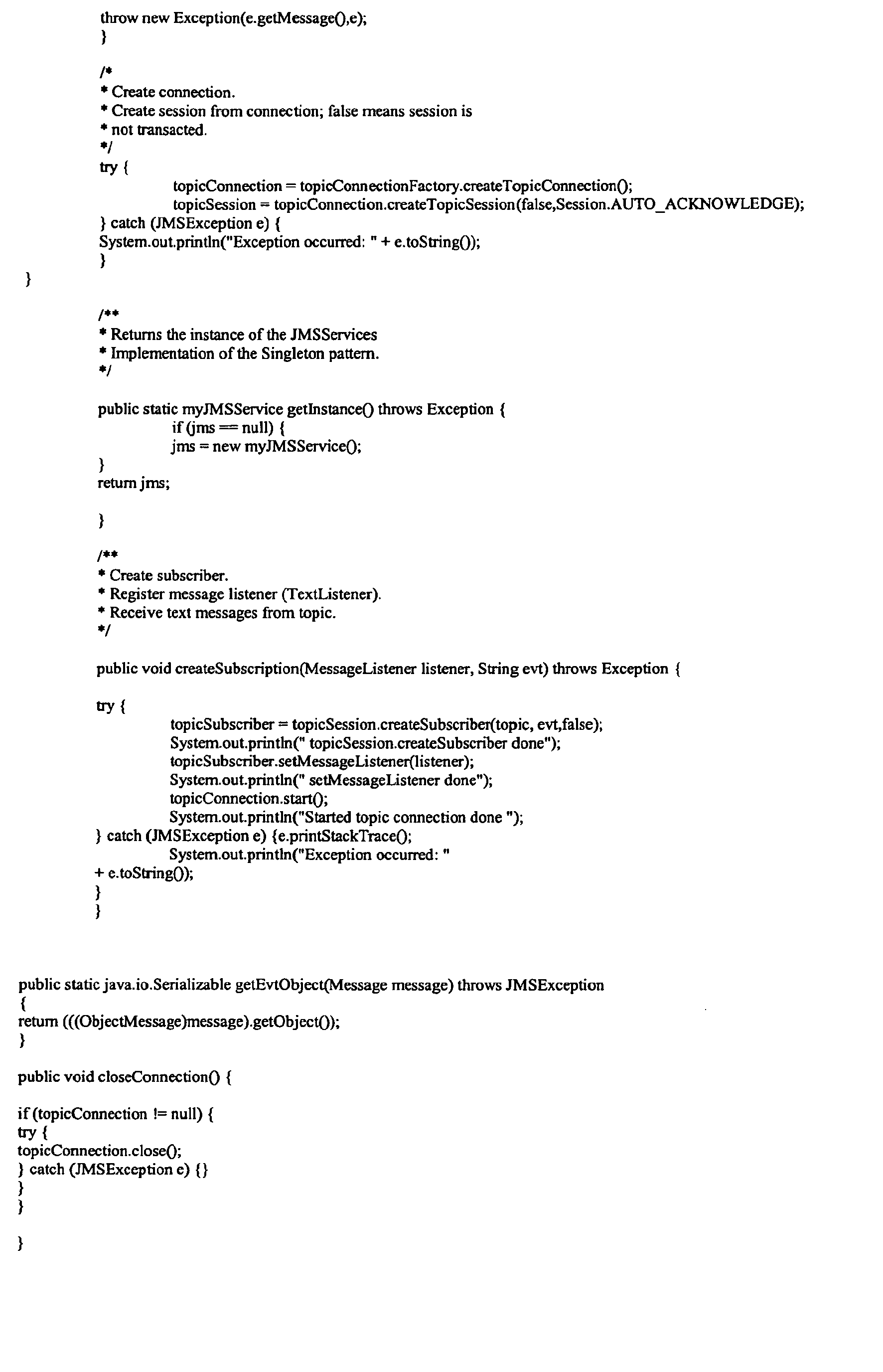

## Claims

1. A method for supporting a decision-making process in a time critical scenario managed by a distributed workflow consisting of a plurality of distributed nodes, the method comprising:
- assessing a given situation with available information to establish confidence percentages for possible decisions associated with the given situation and the distributed workflow;
- creating and providing a distributed workflow architecture that allows the distributed workflow to use the confidence percentages to enable a decision maker to get knowledge of a best possible course of action when executing the distributed workflow,
wherein fuzzy logic is used to compute and maintain the confidence percentages for the possible decisions based on the available information.

2. The method according to claim 1 wherein the available information is obtained from at least one of a past decision history which is stored in an events database, an expert system, and services which are involved in mastering the given situation.

3. The method according to any one of the preceding claims wherein variables characterizing the given situation are established and weighted with an uncertainty factor, respectively, by using the available information, the weighted variables further being cumulated according to prescribed fuzzy-based rules resulting in computing and maintaining the confidence percentages for the possible decisions.

4. The method according to any one of the preceding claims wherein the confidence percentages for every one of the possible decisions are stored and compiled, as needed, to help the decision maker.

5. The method according to any one of the preceding claims wherein, whenever a new event occurs, relevant information is automatically passed to all services which are involved in mastering the given situation, thus allowing for a good monitoring of the given situation at every step of action.

6. The method according to any one of claims 1 to 5 wherein the maintained confidence percentages are transferred as an attribute of the last node executed of the distributed workflow.

7. A workflow management system for supporting a decision-making process in a time critical scenario which is to be managed by a distributed workflow, the system comprising:
- at least one workflow engine that is configured to execute a current local workflow and to use fuzzy-logic to compute, based on available information, confidence percentages for possible decisions associated with a given situation and the distributed workflow;
- a workflow viewer that is configured to display the current local workflow execution, and a distributed workflow history with corresponding associated confidence percentages as a weighted decision tree, and to dynamically updating the distributed workflow as events occur;
- a messaging interface that is configured to act as an adapter between the at least one workflow engine and a central messaging system, the central messaging system being configured to orchestrate a communication within the distributed workflow and to record the distributed workflow execution, and between the at least one workflow engine and an events database that is configured to store instances of the distributed workflow and the computed confidence percentages.

8. The system according to claim 7, further comprising a past decision analyzer that is configured to cumulate past decision confidence percentages and to provide such past decision confidence percentages responsive to a corresponding request.

9. The system according to claim 8, the past decision analyzer further being configured to re-analyse, on each request, a corresponding distributed workflow instance to compute the cumulated probabilities to a desired depth.

10. The system according to any one of claims 7 to 9, the workflow engine further comprising a fuzzy logic library.

11. The system according to any one of claims 7 to 10 wherein the message interface is further configured to translate messages received from the local workflow into a standard messaging format to store the corresponding distributed workflow instance and confidence percentages into the events database.

12. The system according to any one of claims 7 to 11 wherein the messaging interface is further configured to transmit every event that occurs in the workflow execution.

13. The system according to any one of claims 7 to 12 wherein the messaging interface is further configured to act as an adapter between the past decision analyzer and the central messaging system, particularly to transmit requests for information from the past decision analyzer to the central messaging system, and to forward the respective answers.

14. The system according to any one of claims 7 to 13, the system comprising a plurality of workflow engines, each of those workflow engines being configured to execute one local workflow as part of the distributed workflow.

15. Use of the system according to any one of claims 7 to 14 or of the method according to any one of claims 1 to 6 for supporting a decision-making process in a public security scenario, particularly in an emergency workflow.

## Amended claims

### Amended claims in accordance with Rule 137(2) EPC.

**1.** A method for supporting a decision-making process in a time critical scenario managed by a distributed workflow consisting of a plurality of distributed nodes, the method comprising:
- assessing a given situation with available information to establish confidence percentages for possible decisions associated with the given situation and the distributed workflow;
- creating and providing a distributed workflow architecture that allows the distributed workflow to use the confidence percentages to enable a decision maker to get knowledge of a best possible course of action when executing the distributed workflow,
wherein fuzzy logic is used to compute and maintain the confidence percentages for the possible decisions based on the available information, and wherein, for later reviewing of past decisions, the fuzzy-based computed confidence percentages are saved together with the respective finally taken decisions as respective parts of corresponding workflow instances in an events database and, thus, iteratively, the latest workflow instance of the distributed workflow always contains a whole past decision history associated with respective previously fuzzy-based computed confidence percentages.

**2.** The method according to claim 1 wherein the available information is obtained from at least one of a past decision history which is stored in an events database, an expert system, and services which are involved in mastering the given situation.

**3.** The method according to any one of the preceding claims wherein variables characterizing the given situation are established and weighted with an uncertainty factor, respectively, by using the available information, the weighted variables further being cumulated according to prescribed fuzzy-based rules resulting in computing and maintaining the confidence percentages for the possible decisions.

**4.** The method according to any one of the preceding claims wherein the confidence percentages for every one of the possible decisions are stored and compiled, as needed, to help the decision maker.

**5.** The method according to any one of the preceding claims wherein, whenever a new event occurs, relevant information is automatically passed to all services which are involved in mastering the given situation, thus allowing for a good monitoring of the given situation at every step of action.

**6.** The method according to any one of claims 1 to 5 wherein the maintained confidence percentages are transferred as an attribute of the last node executed of the distributed workflow.

**7.** A workflow management system for supporting a decision-making process in a time critical scenario which is to be managed by a distributed workflow, the system comprising:
- at least one workflow engine that is configured to execute a current local workflow and to use fuzzy-logic to compute, based on available information, confidence percentages for possible decisions associated with a given situation and the distributed workflow;
- a workflow viewer that is configured to display the current local workflow execution, and a distributed workflow history with corresponding associated confidence percentages as a weighted decision tree, and to dynamically updating the distributed workflow as events occur;
- a messaging interface that is configured to act as an adapter between the at least one workflow engine and a central messaging system, the central messaging system being configured to orchestrate a communication within the distributed workflow and to record the distributed workflow execution, and between the at least one workflow engine and an events database that is configured to store, for reviewing of past decisions, instances of the distributed workflow and the computed confidence percentages added to the respective instances as attributes.

**8.** The system according to claim 7, further comprising a past decision analyzer that is configured to cumulate past decision confidence percentages and to provide such past decision confidence percentages responsive to a corresponding request.

**9.** The system according to claim 8, the past decision analyzer further being configured to re-analyse, on each request, a corresponding distributed workflow instance to compute the cumulated probabilities to a desired depth.

**10.** The system according to any one of claims 7 to 9, the workflow engine further comprising a fuzzy logic library.

**11.** The system according to any one of claims 7 to 10 wherein the message interface is further configured to translate messages received from the local workflow into a standard messaging format to store the corresponding distributed workflow instance and confidence percentages into the events database.

**12.** The system according to any one of claims 7 to 11 wherein the messaging interface is further configured to transmit every event that occurs in the workflow execution.

**13.** The system according to any one of claims 7 to 12 wherein the messaging interface is further configured to act as an adapter between the past decision analyzer and the central messaging system, particularly to transmit requests for information from the past decision analyzer to the central messaging system, and to forward the respective answers.

**14.** The system according to any one of claims 7 to 13, the system comprising a plurality of workflow engines, each of those workflow engines being configured to execute one local workflow as part of the distributed workflow.

**15.** Use of the system according to any one of claims 7 to 14 or of the method according to any one of claims 1 to 6 for supporting a decision-making process in a public security scenario, particularly in an emergency workflow.
